# EUROPEAN PATENT APPLICATION

(11) **EP 1 842 727 A1**
(43) Date of publication of application: **10.10.2007**
(21) Application number: 07104332.7
(22) Date of filing: 16.03.2007
(51) Int. Cl.: B60R 9/00

(54) **A Movable Crossbar**

(30) Priority: 07.04.2006 GB 0607064; 20.05.2006 GB 0610072; 20.05.2006 GB 0610074
(71) Applicant: Nissan Motor Manufacturing (UK) Ltd., Cranfield, Bedfordshire MK43 0DB (GB)
(72) Inventor: Picton, Christopher, Cranfield, Bedfordshire MK43 0DB (GB); Bickers, Simon, Cranfield, Bedfordshire MK43 0DB (GB); Martin, Steve, Cranfield, Bedfordshire MK43 0DB (GB); Parkhurst, Neal, Cranfield, Bedfordshire MK43 0DB (GB); Kitchen, Matthew, Cranfield, Bedfordshire MK43 0DB (GB)
(74) Representative: Hufton, Victoria Alice

(57) **Abstract**

An assembly (11) is provided for supporting a load above a vehicle luggage compartment (15). The assembly comprises at least one slider (61) configured to be attached, in use, to the vehicle and a crosspiece (51). The crosspiece is slidably releasably attached to the or each slider.

## Description

The invention relates to a vehicle having a movable crossbar.

Crossbars are often used on a vehicle to support large or bulky items during transit. Such crossbars are usually fixed to an upper surface of the vehicle, such as the roof of the vehicle or, for vehicles that have an open luggage compartment such as a pick-up truck, over the open luggage compartment or load bed. These crossbars are either permanent or removable.

A vehicle fitted with a permanent crossbar cannot be readily adapted to position the crossbar to support large or awkwardly shaped luggage optimally. They also cannot be removed if not required.

Removable crossbars may be fitted to a vehicle to provide optimised support for large or awkwardly shaped luggage. However, they can be difficult and time consuming to fit. Also, a design of crossbar tends to be designed for use with many different types of vehicle. Thus, the styling of the crossbar generally does not match well that of the vehicle to which the crossbar is fitted.

It is an aim of the present invention to provide a movable crossbar which overcomes the aforementioned problems.

According to the present invention there is provided an assembly for supporting a load above a vehicle luggage compartment, the assembly comprising at least one slider configured to be attached, in use, to the vehicle, and a crosspiece slidably releasably attached to the or each slider.

The slider may extend substantially along the full length of the luggage compartment. This has the advantage that the position of the crossbar relative to the vehicle (and particularly with respect to the load bed and luggage compartment of the vehicle) can also be adjusted, and in this way, the crossbar can be used to create an adjustable partition or support for cargo contained within the vehicle's luggage compartment.

By the term "crossbar", it is meant a crosspiece and at least one crosspiece support, that when mounted to a vehicle has at least one section that extends laterally across a substantial part of the width of the vehicle. The crossbar forms a bar (strut, arm or barrier etc.) across the vehicle above the luggage compartment in use. Thus, in use, the crossbar may extend across at least 40%, 45%, 50%, 60%, 70%, 80%, or 90% of the lateral width of the vehicle. Preferably, however, the crossbar extends across the entire width of the vehicle.

By "movable about the attachment means" it is meant that the crossbar is mountable in such a way that it can be moved angularly (e.g. pivoted) about its attachment point. Any degree of angular movement or rotation is envisaged to fall within the scope of the invention, e.g. from less than 45° to 360°, as discussed further below.

The crossbar may be of any suitable design and construction. Preferably, the section of the crossbar that extends laterally across the vehicle is an elongate section, although it could equally comprise a panel. For example, the crossbar may have the form of a vehicle roll-bar and may be structurally capable of performing the role of protecting the vehicle occupants in the event that the vehicle overturns. Equally, however, it may have the visual appearance of a functional roll-bar, but may not in fact meet the physical requirements for such equipment. It is beneficial that the crossbar is also designed having regard to the aesthetics of the vehicle to which it is to be attached.

Typically, the crossbar is predominantly of a tubular construction, having an elongate section that extends at least part-way across the lateral width of the vehicle. Preferably, the crossbar also comprises a short section at an angle to the elongate section, which can be considered to act as a support section. The support section is typically also part of the tubular section of the crossbar. More preferably, the crossbar has two such support sections and most preferably the two support sections are positioned at either end of the elongate section of the crossbar. In this embodiment, the elongate section of the crossbar is a mid-section, i.e. it is positioned in-between two support sections. Advantageously, the tubular construction of the crossbar may be clad in panels or other non-structural material that may produce an external appearance that matches or compliments the vehicle to which the crossbar is to be fitted.

The crossbar, particularly where the crossbar comprises a tubular section, may be nonlinear. For example, the crossbar may contain a bend at the junction between the support section(s) and the elongate section. In this case, the long axis of the support section(s) may be at any suitable angle with respect to the long axis of the elongate section of the crossbar, e.g. between 0° and 180°. Preferably, the angle between the support section and the elongate section is between 10° and 170°, between 30° and 150°, between 45° and 135°, or between 60° and 120°. More preferably, the support section is positioned at (or approximately at) 90° (i.e. a right angle) to the elongate section. Thus, in a most preferred embodiment of the crossbar, the axis of the support section(s) is perpendicular to the axis of the elongate section of the crossbar.

It is preferable for the crossbar to be attached to the vehicle through a connection between the support section(s) and the attachment means. Any suitable means for coupling the attachment means to the crossbar may be used, provided that the crossbar is securable in one or more positions relative to the attachment means.

In one example the crossbar may be securable in the support position at any point along the length of the sidewall.

By "securable" it is meant that in use, once properly fitted, positioned and secured, there will be no unwanted movement of the crossbar about the attachment means (i.e. in use the crossbar will neither rotate freely about the attachment means nor become detached from the attachment means until it is deliberately released therefrom).

The crossbar may beneficially be freely movable through an arc of at least 60° about the attachment means and may be securable at any position along the arc relative to the attachment means.

In one embodiment, the elongate section of the crossbar, e.g. the mid-section of the crossbar, is extendible. This is advantageous because it allows the crossbar to be adapted to conform to the lateral width of the vehicle to which it is attached, such that a single crossbar assembly may be optimally attached to vehicles of different width. Any suitable means of elongation may be used, such as a mechanism known to the person of skill in the art. One advantageous mechanism for elongation, e.g. for a tubular crossbar, is a telescopic mechanism.

The attachment means or parts thereof may be manufactured as an integral part of the vehicle, or it may be manufactured separately, and installed on a vehicle at a later date. In the alternative, some components of the attachment means may be manufactured integrally with the vehicle and some components may be manufactured separately, provided means are available for connecting to the components formed integrally with the vehicle.

Similarly, whilst it is possible that the crossbar could be manufactured as an integral and permanent fixture of a vehicle, preferably, the crossbar is removably attachable to a vehicle. In this way, the crossbar can be fitted to and removed from the vehicle, as desired.

Advantageously, the crossbar device comprises a locking system for securing the crossbar in the support position and in the storage position.

Preferably, the locking means is releasable so that the crossbar can be moved to one or more alternative positions.

The crossbar is securable in one or more positions relative to the attachment means. The number of positions in which the locking means is able to secure the crossbar is predetermined. For example, the locking means comprised in the attachment means may be capable of securing the crossbar in one position only, such as in its support position. However, in this embodiment, the crossbar may still be pivoted to alternative positions relative to the attachment means, and may be securable in such alternative positions, albeit with reliance on auxiliary components for fixing the crossbar in position (e.g. clamps, clips, hooks etc. positioned elsewhere on the vehicle). Such auxiliary fixing components may be comprised within the crossbar assembly of the invention.

It is preferable for the crossbar to be securable in two or more positions relative to the attachment means (e.g. 2, 3, 4, 5, 6 or more positions), using the locking means provided. For example, where the crossbar can be secured in two positions using the locking means, the two positions may be a first position when it is not in use (e.g. a support/storage position), and a second position when it is in use. Typically, the crossbar is movable between the first and second secured positions, without needing to fully detach the crossbar from the vehicle. Any angular position between the first and second secured positions may be selected (i.e. from 0° to 360°), depending on the crossbar assembly design, e.g. the positions may be separated by up to 30°, 45°, 60°, 90°, 120°, 135°, 150° or 180°. Preferably, the first and second secured positions are separated angularly by approximately 90° about the attachment means.

In the support/storage position, the crossbar is beneficially secured above the load bed of the vehicle, so that it is essentially within (or above) the luggage compartment of the vehicle. In this position, the crossbar may lie above any cargo contained in the vehicle's luggage compartment, or (particularly where the cargo is large) it may be used as a transverse partition within the luggage compartment. For example, one luggage compartment may be created forward of the crossbar and a second (partially separate) luggage compartment may be created rearwards of the crossbar.

In the second secured position, the crossbar is preferably moved angularly through 90° from the first position, relative to the attachment means. More preferably, the crossbar is moved angularly through 90° towards the rear of the vehicle to take up the second secured position. Most preferably, in the second position the section of the crossbar that previously extended laterally across the vehicle (i.e. above the load bed) is positioned beyond the rear of the vehicle luggage compartment.

Depending upon the point at which the crossbar is attached to the vehicle, it may be possible for the crossbar to be moved into the second position even when the tailgate of the vehicle is closed. However, it is envisaged that this second position will be used primarily when the tailgate of the vehicle is open. In this way, the crossbar can act as a subsidiary closure member (i.e. a barrier) rearward of the normal closed position of the e.g. tailgate of the vehicle. In this position, the crossbar can function to: (i) prevent cargo falling from the rear of the vehicle's luggage compartment; and (ii) create a longer luggage compartment for the transportation of objects that are longer than the normal load bed of the vehicle.

Advantageously, the crossbar assembly of the invention is used in conjunction with a pick-up vehicle, and more preferably, where the vehicle has a closure member that is hinged along the interface between the load bed and the closure member (as in the case of a typical tailgate). In the latter arrangement, in the open position the rear closure member preferably lies approximately horizontally and at approximately the same level as the load bed, such that the inner surface of the tailgate forms an extension of the load bed. Thus, the length of the load bed of the vehicle can be extended by the height of the closure member (tailgate), and the crossbar can be positioned so as to create a replacement closure member in the region of the rearward end of the extended load bed.

In an alternative embodiment, the crossbar may also be securable in one or more further positions in-between the above described first and second secured positions. The crossbar may, for example, be freely movable through an arc of up to 45°, up to 60°, up to 90°, or up to 180° about the attachment means and be securable at any position along that arc relative to the attachment means. Most preferably, however, the crossbar is freely movable about the attachment means (i.e. through 360°) and can be secured at any position relative to the attachment means.

In another example, the crossbar may be releasable from one or both attachment means. For example, a clamping mechanism or other quick-release mechanism may be employed for connecting the crossbar to the attachment means, and by releasing this mechanism the relevant end of the crossbar can be removed from the attachment means. In yet another example, one or both attachment means may comprise a hinged portion, such that when the crossbar is connected to the vehicle at one end only, the hinge allows the crossbar to swing (e.g. sideways), such that the crossbar can be positioned parallel to a sidewall of the vehicle. This may be advantageous where it is desired to remove the crossbar from its lateral position across the luggage compartment of the vehicle, without fully detaching the crossbar from the vehicle.

The crossbar may be securable in the support position at any point along the length of the sidewall. This may be achieved by the crossbar device comprising a locking system for securing the crossbar in the support position and in the storage position. The locking system may be actuated by means of a pivotable handle, provided in a region towards at least one of the ends of the crossbar, wherein on operating the handle the locking system releases the crossbar enabling it to be moved.

In another example, the crossbar may have a crosspiece that, in the support position, defines at least part of a vehicle spoiler adjacent to the roof of the vehicle. It may be further advantageous for at least part of the crossbar comprises a fitting for securing the load.

In one example, at least part of the crossbar comprises a fitting for securing the load. This may take the form of a hook, cleat, loop, strap or clamp to secure items to the crossbar in use.

The present invention may typically be used with a motorised vehicle such as a pick-up truck or other cargo carrying vehicle, but may be used with a non-motorised vehicle, such as a trailer.

In a further example, the effort to move the crossbar along the slider may be assisted by means of a motor.

The slider may be provided with a resilient, flexible seal located along the slot, formed in the open face of the slider, to seal the slot and wherein, on moving the crossbar, the seal is deformed to allow the crossbar to be displaced along the slider.

The rearmost end of the slider may be adjacent to a tailgate of the vehicle, such that the tailgate prevents the crossbar from being removed from the slider when the tailgate is closed, i.e., the tailgate is in a substantially vertical orientation.

The crossbar may be movable between a storage position and a support position. The crossbar may also be shaped and configured so that when in the storage position it appears integrated with a part of the bodywork of the vehicle, and when in the support position it is displaced from the storage position to provide support for a load. The outer profile of the lateral cross-section of the crossbar matches the profile of the lateral cross-section of the vehicle cabin. Furthermore, the lateral cross section of the crossbar device matches the lateral cross section of the vehicle cabin. As a result the width between the upright sections of the crossbar and the height of the substantially horizontal section of the crossbar are both complementary to the styling of the cabin.

In another example, the slider may be mounted to the upper surface of the sidewall of a vehicle. The upper surface of the sidewall may define a platform with sufficient width to seat a person.

In yet another example, a vehicle may have the features of the assembly, wherein the slider may be embedded within the sidewall.

Furthermore there may be provided a vehicle having bodywork and a crossbar which is movable between a storage position and a support position, the crossbar being shaped and configured so that when in the storage position it appears integrated with a part of the bodywork, and when in the support position it is displaced from the storage position to provide support for a load.

Advantageously, the crossbar is movable so that it can readily positioned on the vehicle to provide optimum support for a particular item, or items, of the load, such as luggage, because different items of the load may have different preferred positions of the crossbar. The crossbar is styled to match the styling of the vehicle, so that when the crossbar is not required to support the load it can be moved to the part of the bodywork with which its styling is integrated, or coordinated, to provide an aesthetically pleasing vehicle appearance.

The part of the bodywork may comprise a pillar of the vehicle. The part of the bodywork may, additionally or in the alternative, define a rear panel. A pillar and a rear panel are, typically, integral to a part of the vehicle, such as a passenger cabin. Preferably, the pillar is a B-pillar. The B-pillar is more preferably located towards the rear of the passenger cabin, for example as in the passenger cabin of a pick-up truck. Beneficially, the styling of the crossbar matches that of the pillar. Thus, in the storage position, the crossbar may appear to be part of the pillar.

The crossbar may be slideable relative to the part of the bodywork, between the storage position and the support position. Beneficially, the crossbar is easily and rapidly movable into a position which provides the best support for the luggage.

The vehicle may have a sidewall. More preferably, the vehicle has two sidewalls, one on each side of the vehicle. The sidewalls may define an open luggage compartment. Beneficially, each sidewall may provide a predominantly flat interior surface of the compartment. In the support position, the arrangement of the sidewalls and the crossbar may permit a cover to be fitted over the crossbar, providing an enclosed luggage compartment.

The sidewalls, preferably, provide means along which the crossbar may slide. It may be advantageous for the crossbar to be slideable along substantially the entire length of the sidewall because, by using the full length of each sidewall, the crossbar may be used to support long luggage (for example long planks of wood or surfboards), as well as shorter, awkwardly shaped luggage. The crossbar may be adaptable to support various differently shaped items of luggage optimally. It may be, thus, beneficial for the crossbar to be securable in a support position at any point along the length of the sidewall.

The crossbar may have a support that extends at least to a roof of the passenger cabin. Preferably, the crossbar has two supports. The crossbar may also have a crosspiece interconnecting the supports. The crosspiece may extend laterally across the vehicle, and may be substantially horizontal. More preferably, the crosspiece is substantially flush with the roof. A cabin rear edge may interconnect the pillars which is beneficial because the cabin rear edge may align to meet the crosspiece when the crosspiece is in the storage position. An upper surface of the crosspiece and a surface of the cabin rear edge are substantially flush which, advantageously, facilitates the matching of their styling. Additionally, in the support position, the crosspiece may define part of a vehicle spoiler and the cabin rear edge may define part of the same vehicle spoiler. The spoiler is beneficial because the vehicle is provided with an enhanced performance by virtue of the aligned crosspiece and cabin rear edge.

In the storage position, the crossbar is preferably secured to a front end of the sidewall. Beneficially, the crossbar may match the features of the vehicle at the front end of the sidewall. In the support position in which the crossbar is at its maximum displacement from the storage position, the crossbar is preferably secured to a rear end of the sidewall.

The crossbar may be removable from the vehicle. Advantageously, the crossbar is removed from the vehicle by sliding it off the rear end of the sidewall. Thus, removal of the crossbar may be a quick and easy action. This is advantageous because there may be several different crossbars, each with different stylings and fittings, and the vehicle may be readily adapted for a particular purpose, or appearance, by changing the crossbar.

The sidewall may comprise a slider. Preferably the slider is a linear slider. The crossbar may be secured to the slider, enabling the crossbar to slide along the sidewall. A slider is a preferable sliding mechanism because it is readily available, and easy to fit to a vehicle during manufacture. Beneficially, the slider may permit fast repositioning of the crossbar when adapting the vehicle to provide the optimum luggage support for a particular item of luggage.

Advantageously, the slider is embedded within the sidewall. This may prevent unwanted objects impeding the operation of the slider and ensures that the slider does not interrupt the styling of the vehicle. Typically a slider may comprise a bracket for fitting to the vehicle, a carriage for fitting to the crossbar and a lubricating means, such as a train of greased balls, positioned between the carriage and the bracket.

Preferably, the sidewall comprises an inner panel defining an interior surface of the sidewall. The sidewall may include an outer panel defining an exterior surface of the vehicle bodywork. The exterior surface of the outer panel may advantageously define the fender of the vehicle bodywork. The two panels are advantageously spaced apart. This may beneficially accommodate the slider. The sidewall may enclose a wheel arch.

An upper surface of the sidewall may interconnect the outer panel and the inner panel. The upper surface preferably has a slot through which an end of the crossbar passes. The advantage of the slot is that it permits access of the crossbar to the slider, and retains the styling of the sidewall. A resilient, flexible sealing may be located along the slot. The sealing is beneficial because it seals the slot preventing the ingress of water into the sidewall. On moving the crossbar, the sealing may deform to allow the crossbar to be displaced along the slot, and the sidewall. Preferably, the sealing may be made of rubber.

The upper surface of the sidewall may define a seating platform. This may be beneficial because it allows the vehicle to convey more passengers than can travel in the passenger cabin. The platform may be shaped to have sufficient width to seat a person.

The part of the bodywork which is matched to the styling of the crossbar beneficially comprises a front panel of the compartment. Thus, a dividing wall between the cabin and the compartment may comprise the front end of the compartment.

A base for supporting luggage may further define the compartment. The sidewalls may be angled with respect to the base. Alternatively, the sidewalls may be substantially perpendicular with respect to the base. The compartment may be provided with a tailgate. The tailgate may define the rear wall of the compartment when the tailgate is in a closed position. The tailgate may permit luggage to be pushed onto the base over the tailgate when the tailgate is an open position.

Advantageously, the vehicle may comprise a locking system for securing the crossbar in the support position. The locking system may be operable to secure the crossbar in the storage position. This may be beneficial as the locking system can be used to secure the crossbar anywhere between the extremes of the two positions. Thus, the optimum support for an item of luggage may be provided.

A pivotable handle may be provided in a region towards one of the ends of the crossbar. On operating the handle, the locking system beneficially may release the crossbar enabling it to be moved. The handle advantageously permits the locking system to be easily operated. The locking system may have a locking pad that operates on the slider. The locking system preferably has a cable interconnecting the handle and the locking pad. The cable may be under tension so that on releasing the handle the locking pad reengages with the slider to secure the crossbar in position.

At least one of the crossbar and the part of bodywork may comprise a fitting for securing luggage. The fitting may secure the luggage optimally in the support position. Preferably, the bodywork may provide support for luggage in the support position; and the crossbar may also provide support in the storage position.

The vehicle may be a motorised vehicle, or a non-motorised vehicle, such as a trailer.

Preferred embodiments of the present invention will now be described, by way of example, with reference to the accompanying drawings, in which:
Figures 1a to 1c are schematic, perspective views of the rear of the crossbar assembly according to the claimed invention, Figure 1a shows the crossbar in the rearmost or support position, Figure 1 b shows the crossbar midway between the storage and support positions and Figure 1c shows the crossbar in the storage position;
Figure 2 is a representation of a rear, perspective view of the rear of a vehicle comprising a crossbar assembly according to the claimed invention, the crossbar being in a rear, supporting position;
Figure 3 is a representation of a rear, perspective view of the rear of the vehicle shown in Figure 2, the crossbar being in a forward, storage position;
Figure 4 is a representation of a rear, perspective view of the rear of the vehicle shown in Figure 2, the crossbar being in the rear, supporting position;
Figures 5a and 5b are schematic cross-sectional views through the crossbar and a sidewall of an open luggage compartment of the vehicle as shown in any of Figures 2, 3 and 4, Figure 5a shows a cross-section through the left hand crossbar support and Figure 5b shows a cross-section through the right hand;
Figure 6 is a perspective view of a crossbar assembly of the invention attached to a pick-up vehicle: (A) the crossbar positioned in an upright (first/storage) position; and (B) the crossbar positioned in a horizontal (second) position, in use as a subsidiary luggage compartment closure member/barrier;
Figure 7 is a schematic representation of a preferred crossbar assembly, which includes attachment means for attaching a crossbar to a vehicle, and locking means for securing the crossbar in a selected position: (A) the crossbar assembly in its disassembled state; and (B) the crossbar assembly in its assembled state; and
Figure 8 is a perspective view of the attachment means and crossbar depicted in Figure 7.

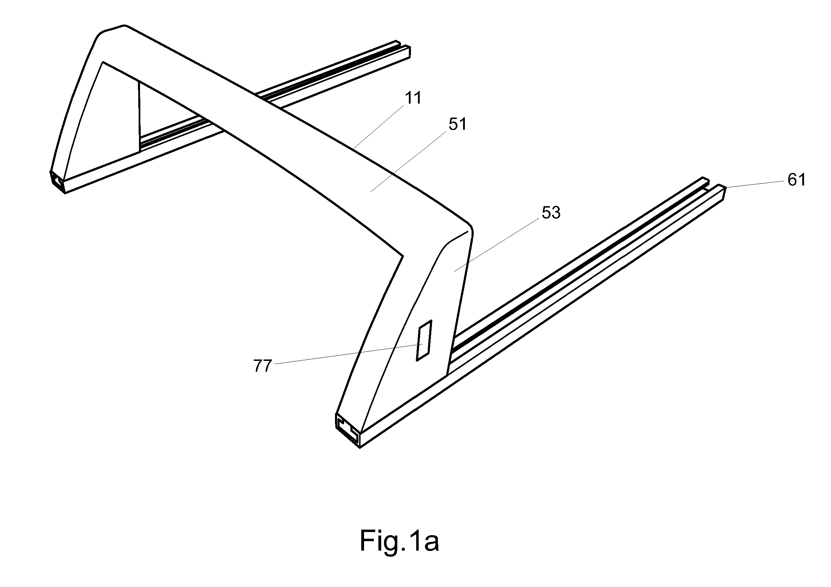

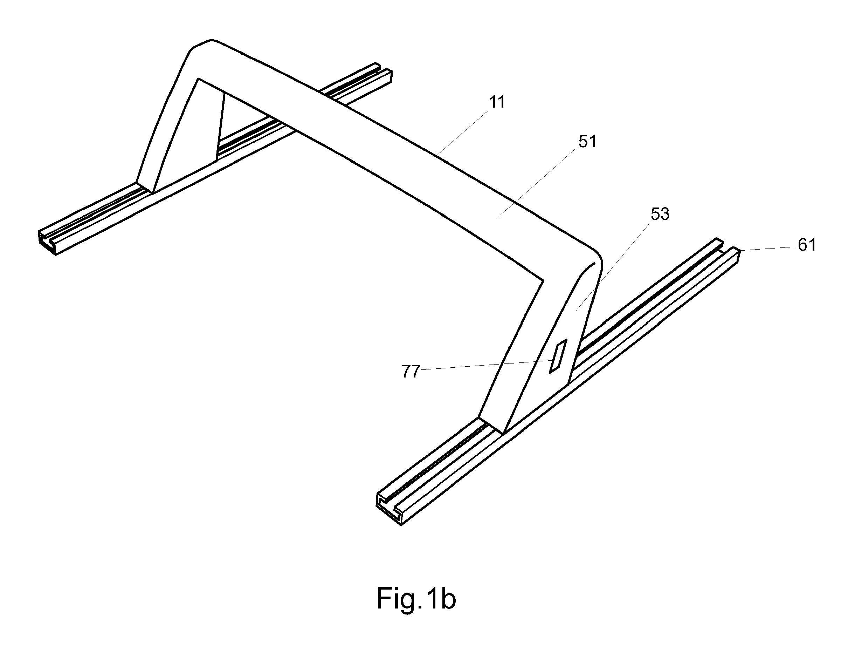

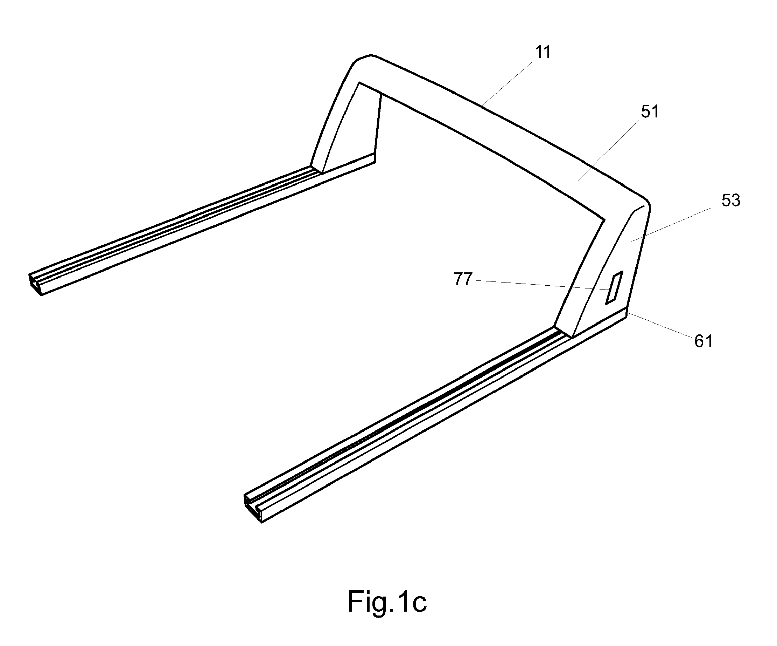

Referring to Figure 1, which shows a crossbar assembly 11, comprising a crosspiece 51 which is orientated substantially horizontally between two, substantially vertical supports, 53, the vertical supports are slideably releasably mounted to sliders 61. The sliders 61 are aligned substantially horizontally and are mounted either side of a vehicle luggage compartment 3, (not shown in Figure 1). The sub-assembly of the supports 53 and the crosspiece 51 will be referred to herein as the crossbar. The sliders are substantially C-section in design that permit the user to assemble the crossbar to the sliders 61 from either end prior to assembly to a vehicle, or typically from the rearmost end of the slider once assembled to the vehicle. The supports 53 include a pivotable handle 77 that is used to release the locking system to permit relative movement of the supports 53 on the sliders 61 or secure the supports 53 in a desired location along the slider 61. It is intended that this handle 77 may be provided on only one side for the assembly 11 to permit one-handed operation of the assembly 11.

Alternatively, there may be provided a handle 77 may be provided a handle on either side of the assembly 11 or alternatively, the locking system may be provided by another means, not shown, such an electro-magnetic actuator such as a solenoid. Figure 1 is shown in three parts, Figure 1a shows the crossbar positioned on the sliders 61 at the rearmost extent of the sliders as they are orientated in the vehicle, this position is intended to provide the user with a support position. Figure 1b shows the crossbar positioned approximately midway between the foremost and rearmost extents of travel provided by the lengths of the sliders 61. Figure 1b demonstrates the advantage that the user may select crosspiece locations in between fully forward and fully rearward. Figure 1c shows the crossbar in a fully forward condition. It is intended that the fully forward position is used as a storage position for the crosspiece by the user. It is intended that the assembly 11 is supplied either as a kit of parts comprising the crosspiece 51, the supports 53 and the sliders 61 for the user to assemble and mount to an existing vehicle. Alternatively the assembly 11 may be incorporated into a vehicle and supplied to the user pre-assembled.

It will be apparent to the skilled reader that the design offers the user the ability to assemble the crossbar to the vehicle without the need for specialist skill or tools. The user may operate the pivotable handle 77 to the unlocked position then, slide the crossbar onto the C-section sliders 61, via the open rearmost ends that may be permanently exposed or, preferably, only accessible when the tailgate is in the open position.

The crossbar 11 is able to move along a sidewall 21 of the luggage compartment 3 because it is fitted to a linear slider 61. The linear slider 61 is mounted along the length of, and within, the sidewall 21, beneath an upper surface 38 of the sidewall 21, 23. The slider 61 comprises a carriage 62, a lubricating means such as a train 69 of greased balls and a bracket 67. The carriage 62 rides in the bracket 67 that is secured to, and embedded within, the slider 61. The slider 61 may fixedly attached to the surface of the sidewall 21, 23 or embedded within the sidewall 21, 23. The train 69 of greased balls is located between the carriage 62 and the bracket 67 to ensure that the carriage 62 is capable of freely sliding along the linear slider 61.

The sliders are formed from substantially C-section channels, the carriage 62 runs along these channels by passing through a slot formed by the C-section channel.

The carriage 62 is fitted to one end of the crossbar 11 by way of a fixing 65. The fixing 65 accesses the carriage through a slot in the upper surface 38, along the length of the slider 61 which may run substantially the length of the sidewall 21, 23. At an opening (not shown) towards the rear end of the slider 61 the slot widens to a width greater than the width of the carriage 62. Thus, if the crossbar 11 is moved to the rear-end of the slider 61, the carriage 62 may pass through the wider opening of the slot, enabling the crossbar 11 to be removed from the vehicle 1.

To replace the crossbar 11, the carriage 62 is inserted through the opening. However, a different crossbar 11 having a different styling or a different set of fittings may be fitted to the vehicle 1.

Since an opening is located towards the rear-end of each slider 61, mounted to or within each sidewall 21, 23, the opening may be positioned such that when the tailgate 19 is in its closed position, the tailgate 19 restricts the size of the opening so that the crossbar 11 cannot be removed from the respective one of the sidewalls 21, 23. The tailgate 19 may have a lock to secure it in the closed position, preventing removal and, thus, theft of the crossbar 11 when the tailgate 19 is locked.

The slot has opposing edges 73. A rubber seal 75 is fitted to the slot to prevent the ingress of water into the slider 61 through the slot. The seal 75 has opposing components, one fitted to each edge 73 of the slot. The seal 75 is resiliently flexible, such that as the crossbar 11 is moved along the sidewall 21, the fixing 65 is moved between the opposing components of the seal 75. The opposing components part from each other and then close to form a seal around the fixing 65 and between themselves.

A locking system is operable to secure the crossbar 11 in position (in the support and the storage positions) relative to the sidewall 21 and to the B-pillars 45. The locking system comprises a pivotable handle 77, a cable 79 and a locking pad 81. The handle 77 is located in a lower region of the panel section 59 of the support 53. In this location, the handle 77 is easy to operate. The handle 77 is attached to the cable 79. The cable 79 is connected to the locking pad 81 which is resiliently biased by a resilient biasing means (not shown), such as a spring, to apply a force to the linear slider 61 to prevent movement between the carriage 62 and the bracket 67. In order to move the crossbar 11 relative to the sidewall 21, the handle 77 is operated, pulling the cable 79 to work against the resilient biasing means, thereby relieving the force applied by the locking pad 81 to the linear slider 61. Once the force has been relieved sufficiently, the linear slider 61 is released and the crossbar 11 is moved into its desired position relative to the sidewall 21. Once the crossbar 11 is in its new position, the handle 77 is released, permitting the locking system to secure the crossbar 11 on the sidewall 21, by way of the locking pad 81 securing the linear slider 61 in position.

Note that of the two sliders 61 in this embodiment, only the linear slider 61 within the left sidewall 21 has a locking system. It is not necessary to have more than one linear slider 61 because the tolerances in the components of the linear slider 61 are sufficiently small to prevent any unwanted movement.

Having described the preferred embodiment of the present invention, it is to be appreciated that the embodiment in question is exemplary only and that variations and modifications, such as will occur to those possessed of the appropriate knowledge and skills, may be made without departure from the scope of the invention as set forth in the appended claims.

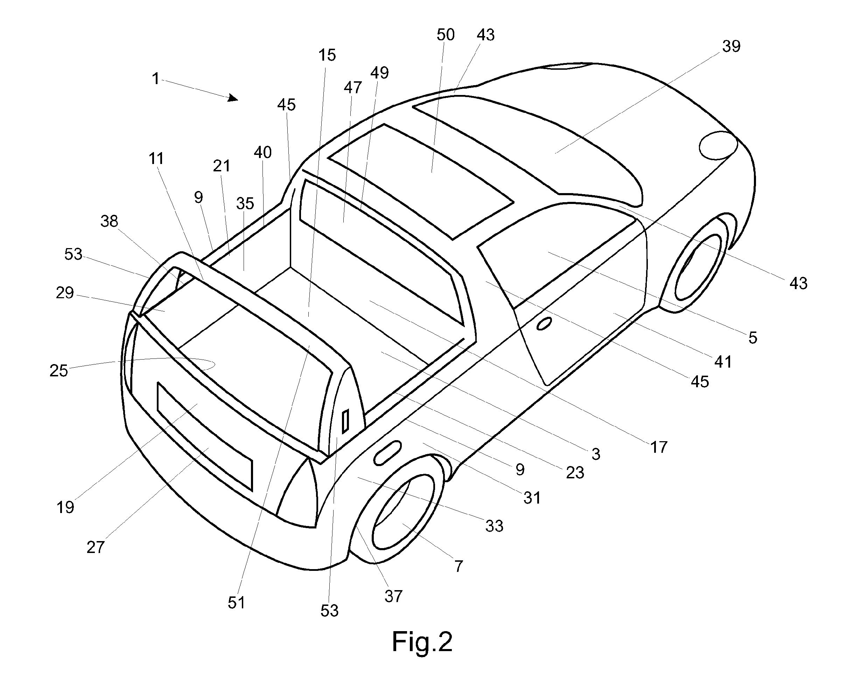

Referring to Figure 2, a pick up truck, such as a two-seater car, has an open luggage compartment 3 and a passenger cabin 5. Although the assembly of the present invention is illustrated in Figures 2 to 5 applied to a pcik up turck, it could also be applied to any other cargo carrying vehicle. The compartment 3 is situated at the rear of the vehicle 1 behind the passenger cabin 5, above a rear pair of wheels 7 and between two rear body fenders 9. The compartment 3 (or load bay) provides a luggage space for storing luggage in the manner of a pick-up truck. So, typically, the compartment 3 is uncovered, although it may have a removable cover (not shown). Fitted to the rear of the compartment 3, and interconnecting the two fenders 9, is a crossbar 11 for providing support to the luggage. As indicated by arrow 13, the crossbar 11 is movable along the full extent of the length of the fenders 9, over the compartment 3.

One preferred use of a vehicle 1 fitted with the compartment 3 as herein described is for outdoor pursuits, and the compartment 3 is intended to be used for storing luggage used in such activities. For example, in a non-limiting list, the luggage may include: tents, mountain bikes, surfboards, camping equipment, diving equipment, or hang-gliding equipment. This type of luggage and equipment can be bulky, awkwardly shaped (for example particularly long) and heavy. The movable crossbar 11 thus provides means for supporting awkwardly shaped luggage, such as that used in outdoor pursuits.

The compartment 3 has a base 15 that is substantially horizontal (when the vehicle 1 is in an substantially horizontal location) and provides a floor of the compartment 3, a front panel 17, a tailgate 19 (or closure member), a left sidewall 21, and a right sidewall 23. The front panel 17 comprises part of a front, dividing wall that separates the passenger cabin 5 from the compartment 3. The tailgate 19 has an internal face 25 and an external face 27. The tailgate 19 is mounted to a chassis (not shown) of the vehicle 1 at the vehicle rear, by means of a hinge arrangement (not shown) so as to permit the tailgate 19 to be moved between an open position in which the internal face 25 lies face upwards and aligns, substantially in parallel, with the base 15 of the compartment 3, and a closed position in which the internal face 25 defines a substantially upright rear wall of the compartment 3. The external face 27 is shaped and contoured so that when the tailgate 19 is in the closed position the external face 27 provides an aesthetically pleasing appearance to the rear end of the vehicle 1.

The sidewalls 21, 23 each have an interior surface 29 that defines a side surface of the compartment 3, and an exterior surface 31 that defines a respective one of the rear body fenders 9. The interior surfaces 29 are predominantly flat, generally smooth and without protrusions. Thus luggage does not catch on the sidewalls 21, 23 on loading into, or on unloading from, the compartment 3, especially bulky and awkwardly shaped items. Loading and unloading is consequently a relatively easy and straightforward activity. The exterior surfaces 31 are sculptured so that the styling of the fenders 9 matches the styling of the bodywork of the rest of the vehicle 1.

Each sidewall 21, 23 is defined by an outer panel 33 and by an inner panel 35. The interior surface 29 of the sidewall 21, 23 is a surface of the inner panel 35 and the exterior surface 31 of the sidewall 21, 23 is a surface of the outer panel 33. The panels 33, 35 are spaced apart sufficiently so that the sidewalls 21, 23 each enclose a rear wheel arch 37, hiding them each behind the respective one of the inner panels 35. Consequently, the wheel arches 37 do not protrude into the compartment 3.

Interconnecting the panels 33, 35 is an upper surface 38. The upper surface 38 includes a seating platform 40. The platform 40 is sufficiently wide for a person to sit on, and it is sufficiently strong to bear the weight of a person.

The passenger cabin 5 has a rear panel 47 that, together with the front panel 17, comprises a front, dividing wall that separates the passenger cabin 5 from the compartment 3. The passenger cabin 5 includes a structural frame that comprises a pair of A-pillars 43 and a pair of B-pillars 45. One of each type of pillar 43, 45 is located towards the left side of the vehicle 1. The other pillar 43, 45 of each pair is positioned towards the right side of the vehicle 1. Each A-pillar 43 is located between a front windscreen 39 of the cabin 5 and a cabin side-door 41, and each B-pillar 45 is positioned between one of the doors 41 and the rear panel 47 of the vehicle 1, the rear panel 47 interconnecting the B-pillars 45. A cabin rear edge 49 defines a rear part of a roof 50 of the passenger cabin 5 at the intersection with the upper region of the rear panel 47. When luggage is stored in the compartment 3, luggage is supportable by fixings (not shown) located on the cabin rear edge 49, and to which the supported luggage may be safely secured.

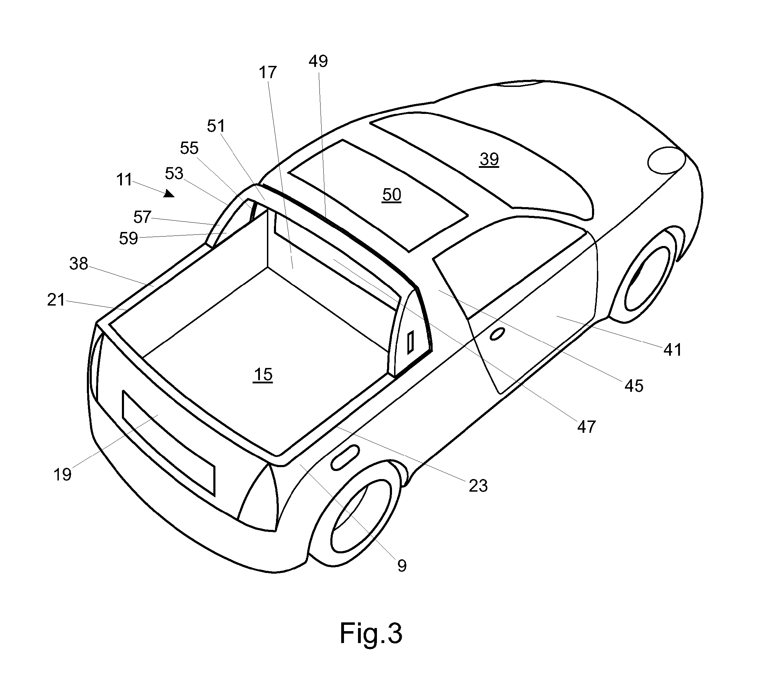

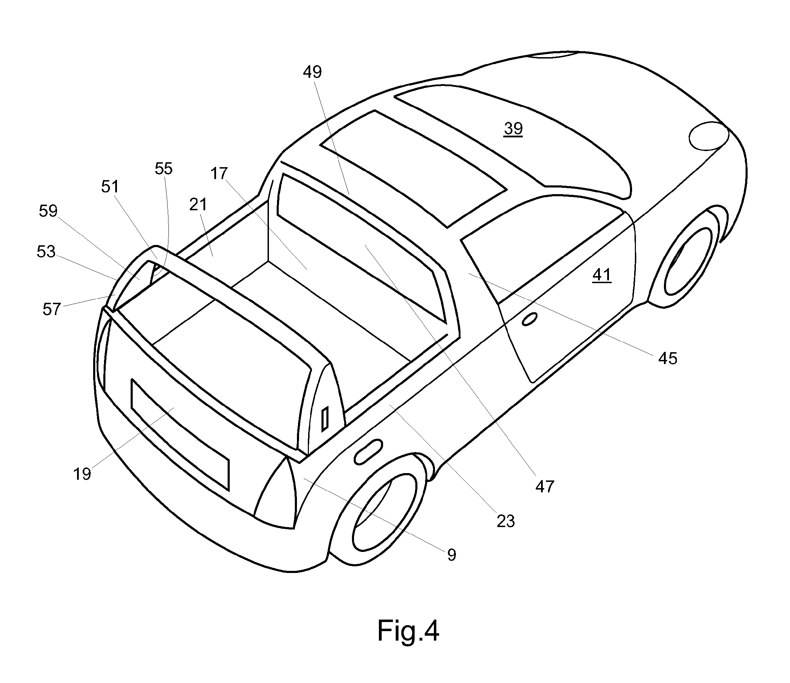

Referring to Figures 3 and 4, features present in Figure 2 and either Figure 3 or Figure 4, or both, take the same reference numbers. The crossbar 11 comprises a substantially horizontal crosspiece 51 for supporting luggage and two substantially vertical supports 53. Each support 53 has a forward side 55 directed towards the front of the vehicle 1, a rearward side 57 angled down towards the rear of the vehicle 1, and a panel section 59 between the two sides 55, 57. The crossbar 11 also has attachments (not shown) on which luggage may be secured.

The crossbar 11 has two positions, a storage position and a support position, between which the crossbar 11 is movable. Thus the crossbar 11 may be readily repositioned to support luggage optimally.

In the storage position, as shown in Figure 3, the crossbar 11 is positioned against the rear panel 47 so that the crosspiece 51 meets the cabin rear edge 49 to define a spoiler. The height of the crosspiece 51 relative to the compartment 3 is defined with respect to the cabin rear edge 49, so that an upper surface of the crosspiece 51 is substantially flush with the roof 50. The forward side 55 of each support 53 abuts a part of the surface rear panel 47 in the region of the rear of the cabin. In the case of the pick-up truck 1 illustrated this coincides with one of the B-pillars 45, so that it appears to be no more than an extension of the B-pillar 45. For these reasons, the styling of the crossbar 11 is substantially the same as the styling of the bodywork of the rest of the vehicle 1, particularly the passenger cabin 5 and the compartment 3. Thus, when the crossbar 11 is not required for supporting luggage, it can be moved into the storage position in which, due to its styling, it appears matched to the B-pillars 45. In this storage position, the crossbar 11 thus appears to be a structural feature of the rear of the cabin 5.

In the support position, the crossbar 11 is spaced away from the passenger cabin 5, and is secured at any point long the sidewalls 21, 23. For example, as shown in Figure 4, the crossbar 11 is moved to the rearmost end of the compartment 3. In this position, it is possible to use the crossbar 11 to support luggage, particularly of long lengths which extend from the cabin rear edge 49.

As the crossbar 11 may be readily repositioned to support the luggage optimally, it overcomes the problem encountered by an immovable crossbar which cannot be moved to support luggage optimally. The crossbar 11 solves the problem of a removable crossbar that requires refitting in order to support the luggage optimally, which may be a complex and/or time-consuming exercise. Additionally, as the crossbar 11 matches the styling of the B-pillars 45, it appears to be a structural feature of the rear of the cabin 5 when it is moved into its storage position.

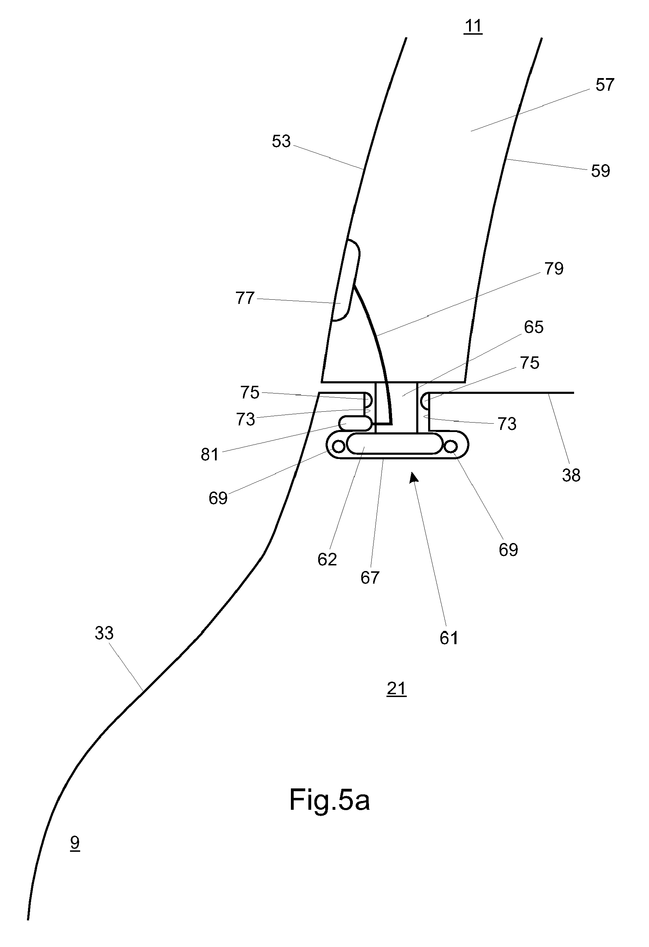

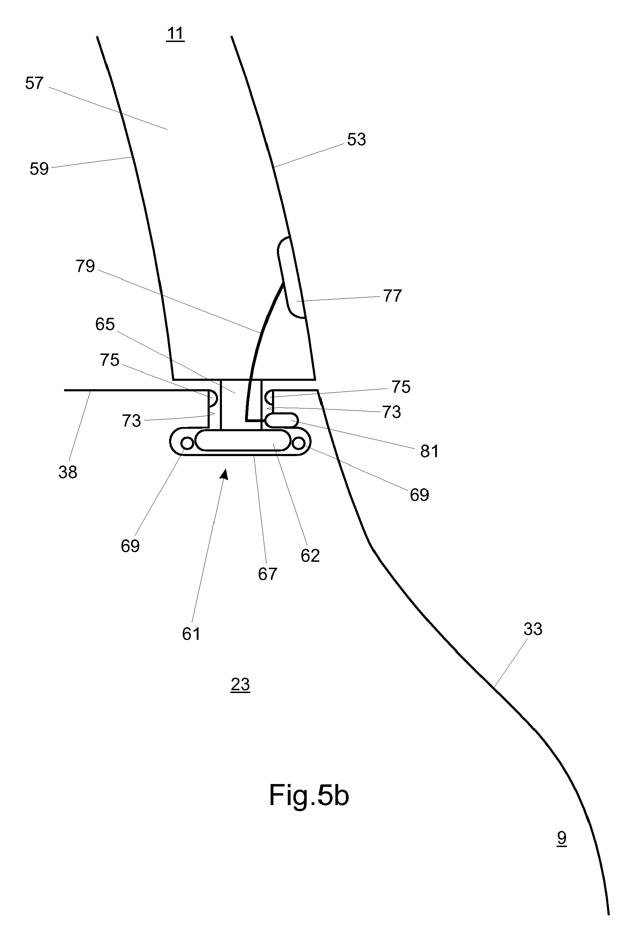

Referring to Figure 5a, the left side of the compartment 3 and its left sidewall 21 are shown. Features present in Figure 5a are described in reference to the left side of the compartment 3, but the features of the right side of the compartment 3 may be the same and are shown in Figure 5b for purpose of clarity. Also, features that are also common to Figure 1, Figure 2, Figure 3 or Figure 4, (or any combination of them) take the same reference numerals.

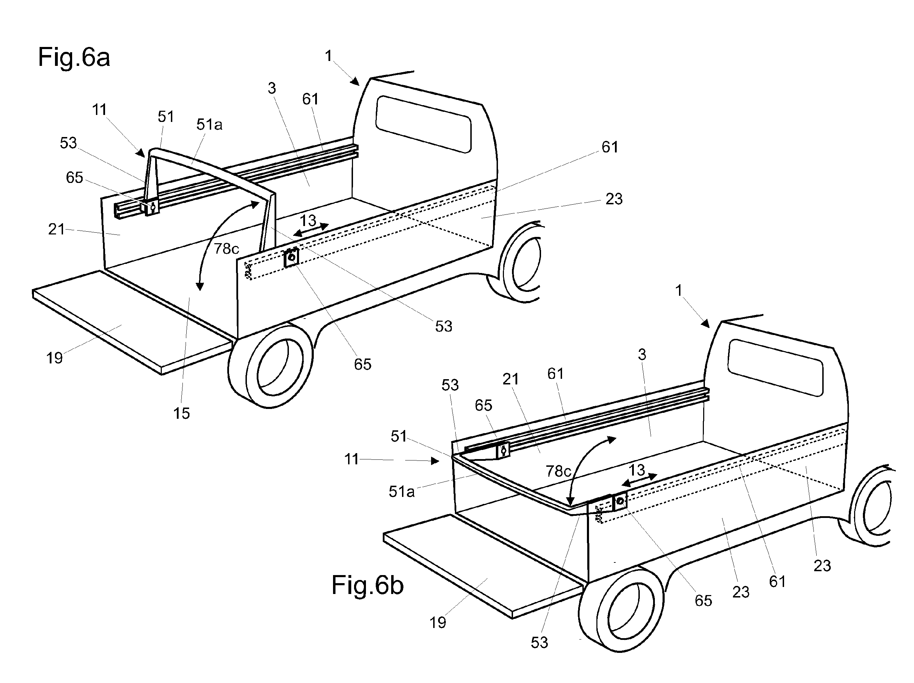

Referring to Figure 6, a pick-up vehicle 1 has a luggage compartment 3; defined by a load bed 15, lateral (left- and right-hand) sidewalls 21, 23 and a closure member (tailgate) 19. The tailgate 19 is depicted in the open position. A crossbar assembly 11 according to the invention comprises a crosspiece 51, having an elongate mid-section 51 a and perpendicular support sections 53; and attachment means (crossbar support fixing bracket) 65, which include linear sliders 61. The sliders 61 are mounted on the inner surfaces of opposite sidewalls 21, 23, respectively. The crosspiece 51 (and components of the crossbar assembly 11) can move along the sliders 61 in the directions indicated by the arrow "13". In Figure 6(A) the crosspiece 51 is in a first angular position relative to the attachment means 65 in which the support sections 53 of the crosspiece 51 are substantially arranged vertically. In Figure 6(B) the crosspiece 51 has turned through an angle of approximately 90° relative to the attachment means 65, as indicated by the arrow "14" which indicates pivot motion of the crossbar. The crossbar is now in a second position in which the support sections 53 are approximately horizontal and the elongate mid-section 51 a creates a lateral barrier rearward of the luggage compartment 3.

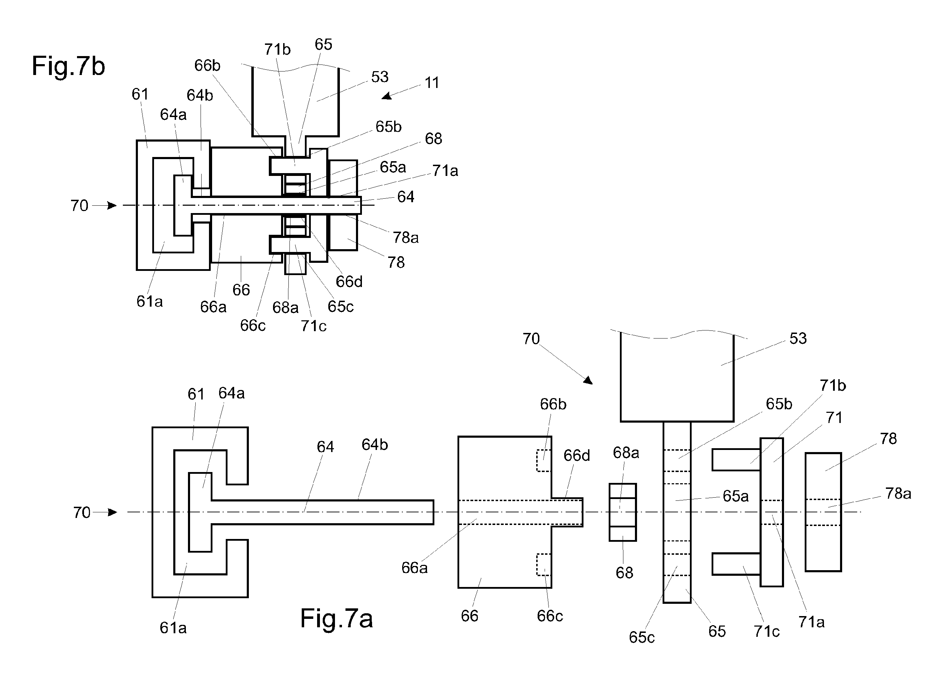

Turning to Figures 7(A) and (B), the crossbar assembly 11 comprises attachment means 70 and crosspiece 51. The attachment means 70 includes a "C"-channel guide rail 61, having a channel 61 a in which the head 64a of a fixing screw 64 is accepted. The fixing screw 64 is provided with a screw-threaded portion 64b. A fixing bracket 66 has a central projection 66a with a through bore that is wide enough to accommodate the screw-threaded portion 64b of the fixing screw 64. The fixing bracket 66 is further provided with blind holes 66b, 66c, and a central projection 66d for accepting a bearing 68. The crossbar assembly 11 has a flat bracket (crossbar support fixing bracket) 65, which is provided with a central bore 65a for accommodating the bearing 68, and further bores 65b, 65c. A locking plate 71 is provided with a central through-bore 71 a, which is wide enough to accommodate the screw-threaded portion 64b of the fixing screw 64, and projections 71 b, 71 c, which are locatable in bores 65b, 65c, respectively, of the flat bracket 65. Finally, a crossbar pivot release handle 78 has a central, threaded bore 78a, which complements the screw-threaded portion 64b of the fixing screw 64.

As depicted in Figure 7(B), the crossbar assembly 11 is assembled with the head 64a of the fixing screw 64 within the channel 61 a of the slider 61. The fixing bracket 66 is placed onto the screw-threaded portion 64b of the fixing screw 64 and the bearing 68 is placed over the central projection 66a of the fixing bracket 66. Next the crossbar assembly 11 is attached by placing the central bore 65a of the flat bracket 65 over the bearing 68. The locking plate 71 is installed by placing its central bore 71 a around the screw-threaded portion 64b of the fixing screw 64, and locating the projections 71 b, 71 c through the further bores 65b, 65c, respectively, of the flat bracket 65 and into the blind holes 66b, 66c of the fixing bracket 66. The crossbar pivot release handle 78 is then screwed onto the end of the screw-threaded portion 64b of the fixing screw 64 and tightened to secure all of the components in place.

By loosening (unscrewing or partially unscrewing) the crossbar pivot release handle 78, the frictional force between the head 64a of the fixing screw 64 and the "C"-channel linear slider 61 is released/reduced, allowing the crossbar 11 (along with the fixing screw 64, fixing bracket 66, bearing 68, locking plate 71 and crossbar pivot release handle 78) to be moved along the slider 61. Thus, the position of the crossbar 11 along the slider 61 can be adjusted. Once a new position for the crossbar 11 has been selected, the crossbar pivot release handle 78can be tightened in order to re-secure the crossbar 11 in its new selected position.

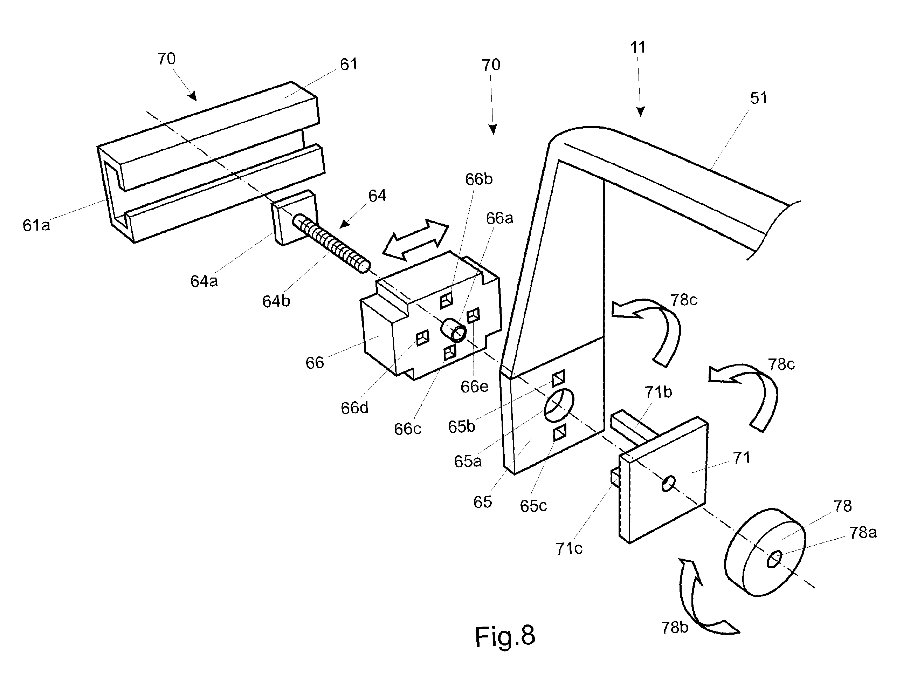

Figure 8 depicts another example of the crossbar assembly 11 of Figure 7, in which the crosspiece 51 can be secured in two angular positions relative to the attachment means 70.

In the first position relative to the attachment means 70 the bores 65b, 65c of the flat bracket 65 of the crossbar 11 are aligned with the blind holes 66b, 66c, respectively, of the fixing bracket 66. The crossbar is secured in place by locating the projections 71 b, 71 c of the locking plate 71 through the bores 65b, 65c and into a first set of blind holes 66b, 66c, and then by tightening the crossbar pivot release handle 78 by turning it in the direction of the arrow "78b".

To obtain the second secured position of the crossbar 11 relative to the attachment means 70, the crossbar pivot release handle 78 and the locking plate 71 are first removed. The crossbar 11 is then rotated by 90°, as indicated by the arrow "78c", until the bores 65b, 65c of the flat bracket 65 of the crossbar 11 align with a second set of blind holes 66d, 66e, respectively, of the fixing bracket 66. Finally, the crossbar 11 is secured in place by locating the projections 71 b, 71 c of the locking plate 71 through the bores 65b, 65c and into the blind holes 66d, 66e, and by screwing the crossbar pivot release handle 78 onto the end of the screw-threaded portion 64b of the fixing screw 64.

In alternative embodiments, there may be multiple sets of blind holes in the fixing bracket to allow for the securing of the crossbar at multiple, different angular positions relative to the attachment means. Alternatively, the blind holes may be replaced with, for example, a continuous blind channel, which allows infinite angular positions to be selected.

The luggage compartment 3 may have a cover. The cover may be secured to at least the left and right sidewalls 21, 23, and preferably to the upper surface 38 of each sidewall 21, 23. The cover may secure over the crossbar 11, and when in the support position, the cover may convert open luggage space into covered luggage space with the cover substantially aligning with, or covering, the upper surface of the crosspiece 51 of the crossbar 11. The crossbar 11 may have attachments for securing to the cover.

The crosspiece 51 of the crossbar 11 may be detachable from the side panel sections 59, enabling the panel sections 59 to be moved independently along the sidewalls 21, 23. (For the panel sections 59 to move independently, the linear slider 61 for each panel section 59 preferably has its own locking system).

In a variation of the preferred embodiment, the crossbar 11 is substantially parallel to the sidewalls 21, 23. The crossbar 11 moves along the tailgate 19 and the rear panel 47 of the vehicle 1 between one sidewall 21, 23 and the other. In another embodiment, there may be more than one crossbar 11. The crossbars 11 may move independently, and be located together in a stored position, providing an integrated styling feature of the vehicle 1.

In another variation of the preferred embodiment, the upper surfaces of the sidewalls 21, 23 are substantially continuous with the base 15 of the load bed floor. This arrangement may give the impression that the compartment 3 does not have sidewalls.

The locking system may have a motor for moving the crossbar 11 along the sidewalls 21, 23, the motor operating once the locking pad 81 has been released. The locking system may be remotely operable from the passenger cabin 5. Any other sort of handle may be used to operate the locking system other than the pivoting handle 77, for example, a rotating handle, or a pulley system.

Note that the linear slider 61 described in the preferred embodiment is only exemplary and, instead of a train 69 of greased balls, it may comprise a rack and pinion, a cog and chain, or any other sort of mechanism that may be used to move the crossbar 11 along the sidewalls 21,23.

Each of the sidewalls 21, 23 may be shaped to have a depression or a cut-out along its length, between its upper surface 38 and its interior surface 29. The depression is dimensioned so as to receive a track system such that it is flush with the interior surface 29. So, on loading or unloading the compartment, luggage does not catch on the track. The track system is used to secure a support bar (not shown) that is different from the crossbar herein described, but is for supporting typically bulky luggage in the compartment 3. It will be appreciated that the support bar is separate and different from the movable crossbar 11 and, in particular, the support bar is not styled to match the bodywork of the vehicle 1 when it is in its most forward position, towards the cabin 5.

The rear cabin edge 49 may be styled so that it is shaped and configured to support luggage. For example, the styling of the rear cabin edge 49 may include fixings integrated into the bodywork of the cabin 5.

The roof 50 of the passenger cabin 5 may have roof rack. The roof rack may be embodied as a roof-bar located on the cabin rear edge 49. The roof rack may be shaped and configured, together with the crossbar 11, to support long loads of luggage, especially when the crossbar 11 is in the support position. The roof rack may have fixings by which a load may be safely secured to the vehicle.

The luggage compartment 3 is not necessarily located at the rear of the vehicle 1, and may instead be located at the side or the front of the vehicle 1. Furthermore, the vehicle 1 may not be motorised, and may be a trailer such as for a truck or car.

## Claims

1. An assembly (11) for supporting a load above a vehicle luggage compartment (3), the assembly comprising at least one slider (61) configured to be attached, in use, to the vehicle (1), and a crosspiece (51) slidably releasably attached to the or each slider (61).

2. The assembly (11) as claimed in claim 1, wherein the slider (61) extends substantially the full length of the luggage compartment (3).

3. The assembly (11) as claimed in claim 1 or claim 2, wherein the crosspiece (51) is securable in the support position at any point along the length of the sidewall (21, 23).

4. The assembly (11) of claims 1 or 2, further comprising attachment means (70) for attaching the crosspiece (51) to the vehicle (1) wherein the crosspiece (51) is freely movable through an arc of at least 60° about the attachment means (70) and is securable at any position along the arc relative to the attachment means (70).

5. The assembly (11) according to any of the preceding claims, wherein the mid-section (51 a) of the crosspiece (51) is extendible.

6. The assembly (11) as claimed in any preceding claim, wherein the crossbar assembly (11) comprises a locking system for securing the crosspiece (51) in the support position and in the storage position.

7. The assembly (11) as claimed in claim 4, wherein a pivotable handle (77) is provided in a region towards at least one of the ends of the crosspiece (51), wherein on operating the handle (77) the locking system releases the crosspiece (51) enabling it to be moved.

8. The assembly (11) as claimed in any preceding claim, wherein the crossbar assembly (11) has a crosspiece (51) that, in the support position, defines at least part of a vehicle spoiler adjacent to the roof of the vehicle.

9. The assembly (11) as claimed in any preceding claim, wherein at least part of the crossbar assembly (11) comprises a fitting for securing the load.

10. The assembly (11) as claimed in any preceding claim, wherein the vehicle (1) is a non-motorised vehicle, such as a trailer.

11. The assembly (11) as claimed in any preceding claim, wherein the effort to move the crosspiece (51) along the slider (61) is assisted by means of a motor.

12. The assembly (11) as claimed in any preceding claims wherein the slider (61) comprises at least one channel defined by at least one edge (73) and a resilient, flexible seal (75) located along the edge (73) of the open face of the channel of slider (61) to seal the channel; and wherein, on moving the crosspiece (51), the seal (75) is deformed to allow the crosspiece (51) to be displaced along the slider (61).

13. The assembly (11) as claimed in any preceding claim, wherein the rearmost end of the slider (61) is adjacent to a tailgate (19) of the vehicle, such that the tailgate prevents the crossbar from being removed from the slider (61) when the tailgate (19) is closed, i.e., the tailgate is in a substantially vertical orientation.

14. The assembly (11) as claimed in any preceding claim, wherein the crosspiece (51) which is movable between a storage position and a support position, the crosspiece (51) being shaped and configured so that when in the storage position it appears integrated with a part of the bodywork of the vehicle (1), and when in the support position it is displaced from the storage position to provide support for a load.

15. A vehicle (1), having the features of the assembly as claimed in any of the preceding claims, wherein the slider (61) is embedded within the sidewall (21, 23).
